# EUROPÄISCHE PATENTSCHRIFT

(11) **EP 2 051 042 B1**
(45) Veröffentlichungstag und Bekanntmachung des Hinweises auf die Patenterteilung: **03.11.2010**
(21) Anmeldenummer: 08405241.4
(22) Anmeldetag: 26.09.2008
(51) Int. Cl.: G01B 11/25, A61C 13/00

(54) **Vorrichtung zur tomografischen Erfassung von Objekten**
Device for tomographically recording objects
Dispositif destiné à la détection tomographique d'objets

(30) Priorität: 18.10.2007 CH 16242007
(43) Veröffentlichungstag der Anmeldung: 22.04.2009
(73) Patentinhaber: Nectar Imaging S.r.l., 40026 Imola (BO) (IT)
(72) Erfinder: Berner, Markus, 8155 Niederhasli (CH)
(74) Vertreter: Rottmann, Maximilian

(56) Entgegenhaltungen:
- DE-A1- 4 314 602
- JP-A- 58 035 406
- US-B1- 6 291 817

## Beschreibung

Die Erfindung betrifft eine Vorrichtung zur tomografischen Erfassung von Objekten, vorzugsweise Zähnen.

Es sind Vorrichtungen und Verfahren zur Erfassung und Verarbeitung von Bilddaten von Objekten mittels optischer Kohärenztomographie (OCT) bekannt.

Eine Vorrichtung zur Erfassung und Verarbeitung von Bilddaten von Objekten auf dem Gebiet der Zahnmedizin mittels optischer Kohärenztomographie (OCT) ist beispielsweise in der WO 2004/100068 A3 angegeben.

US 4 837 732 A betrifft ein Verfahren und eine Vorrichtung für eine dreidimensionale Registrierung und Anzeige von Zähnen, wobei ein Triangulationsverfahren verwendet wird, bei welchem Linien projiziert und dann unter einem anderen Winkel betrachtet werden. Aufgrund der Verzerrung der Linien wird auf die dreidimensionale Form geschlossen. Zum Erhalten einer höheren Auflösung werden die Linien bewegt. Das aus US 4 837 732 A bekannte Verfahren funktioniert nur bei opaken Proben, weshalb die Zähne zur Messung eingepudert werden müssen. Weiterhin muss ein Objekt unter einem Winkel beleuchtet und unter einem anderen Winkel beobachtet werden, weshalb sehr steile Flanken nicht gemessen werden können.

Es sind weiterhin Vorrichtungen bekannt, bei welchen eine dreidimensionale Vermessung von Objekten unter Verwendung von Moiree-Mustern erfolgt. Dabei wird ein Muster eines ersten Gitters mittels eines von einer Lichtquelle ausgesendeten Lichtstrahls auf ein Objekt projiziert und der vom Objekt reflektierte Lichtstrahl durch ein in seinem Strahlengang vorgesehenes zweites Gitter, das dasselbe Muster wie das erste Gitter hat, geführt und durch einen Sensor erfasst, so dass der Sensor den vom Objekt reflektierten Lichtstrahl mit einem aus einer Überlagerung des Musters des ersten Gitters und des Musters des zweiten Gitters resultierenden Moiree-Muster erfasst.

Bei einer solchen Vorrichtung erfolgt die Vermessung des Objekts, indem aufgrund der Form des resultierenden Moiree-Musters auf die Form der Oberfläche geschlossen wird.

US 5 714 832 A betrifft eine Vorrichtung zum genauen Positionieren eines Gitters, wobei aufgrund der Form von Moiree-Linien auf die dreidimensionale Form geschlossen wird. Die Linien werden verschoben und zur Verbesserung der Signalqualität wird eine Schmalbandfilterung eingesetzt, durch welche Information über die Steilheit der gemessenen Fläche erhalten wird.

DE 41 36 002 A1 betrifft eine Moiree-Konturenabbildungsvorrichtung, wobei eine Messung erfolgt, wie es im voranstehend angegebenen Dokument US 5 714 832 A offenbart ist. Eine Beleuchtung kann mittels LEDs erfolgen.

US 2006/0132802 A1 betrifft ein System für eine dreidimensionale Rekonstruktion eines Oberflächenprinzips einer Oberfläche eines Objekts, wobei eine Messung auf ähnliche Weise erfolgt, wie es im bereits angegebenen Dokument US 4 837 732 A offenbart ist. Polarisatoren (zwei um 90° gedrehte LinearPolarisatoren) werden zur Unterdrückung der Oberflächenreflexion eingesetzt. DE 43 14 602 A1 betrifft ein Verfahren und eine Vorrichtung zur Herstellung von Passkörpern, wie zur Herstellung von Zahnersatz, wobei ein in einem Strahlengang hinter einer Lichtquelle angeordnetes optisches Strichgitter wiederholt unter leichtem örtlichen Versatz auf das Aufnahmeteil projiziert wird und die Aufnahme zur Berechnung des Passkörpers verwendet wird. Die Aufnahme erfolgt an dem auf das Aufnahmeteil projizierten optischen Strichgitter vorbei mittels einer Matrixkamera zur Erzeugung von Moiree-Streifen. Das Gitter ist bewegbar und die Zeilenstruktur der Matrixkamera wird als weiteres Gitter zur Erzeugung von Moiree-Streifen benutzt.

US 6,291,817 B1 betrifft eine Vorrichtung zur Erfassung und Berechnung dreidimensionaler Daten eines Objekts aus einem während einer Bewegung eines Gitters beobachteten Moiree-Muster. Das in einem Strahlengang hinter einer Lichtquelle angeordnete bewegbare Gitter ist nahe einem stationären Gitter angeordnet, wodurch bei einer Bewegung des bewegbaren Gitters ein Moiree-Muster erzeugt wird. Die Änderung des Moiree-Musters während einer Bewegung des bewegbaren Gitters wird durch Erfassung der Lichtintensität des Moiree-Musters mittels einer Photozelle erfasst

Es sind auch Vorrichtungen bekannt, welche nach dem Prinzip des Laser-Konfokalmikroskops arbeiten (US2007/0109559 A1)

Bei Anwendungen bei diffusen oder bei transluzenten Oberflächen gibt es das Problem, dass eine Intensität des Moiree-Musters des erfassten Objekts sehr schwach im Vergleich mit anderem Licht ist, das von dem Objekt reflektiert wird.

Daraus resultierend ist es eine Aufgabe der vorliegenden Erfindung, eine Vorrichtung zur tomografischen Erfassung von Objekten zur Verfügung zu stellen, mit welcher eine gute Erfassung von Objekten, wie beispielsweise Zähnen, sichergestellt wird.

Diese Aufgabe wird erfindungsgemäss durch die im Anspruch 1 angegebene Vorrichtung gelöst. Die abhängigen Ansprüche 2 bis 17 zeigen spezielle Ausführungsformen der Vorrichtung gemäss Anspruch 1.

Erfindungsgemäss wird insbesondere eine Vorrichtung zur tomografischen Erfassung von Objekten, vorzugsweise Zähnen, zur Verfügung gestellt, welche Vorrichtung Folgendes aufweist:
eine Lichtquelle, die einen Lichtstrahl zum Bestrahlen des Objekts erzeugt;
ein im Strahlengang des Lichtstrahls hinter der Lichtquelle angeordnetes erstes Gitter, durch welches der Lichtstrahl vor einem Bestrahlen des Objekts geführt wird, so dass ein Muster des ersten Gitters auf das Objekt projiziert wird;
eine Abbildungsoptik zur Abbildung des Objekts auf einen Sensor; ein im Strahlengang des reflektierten Lichtstrahls vorgesehenes zweites Gitter mit einem zum ersten Gitter passenden Muster, durch welches zweite Gitter der reflektierte Lichtstrahl mit dem Muster des ersten Gitters geführt wird, so dass der Sensor den vom Objekt reflektierten Lichtstrahl mit einem aus einer Überlagerung des Musters des ersten Gitters und des Musters des zweiten Gitters resultierenden Moiree-Muster erfasst;
eine Bewegungseinrichtung, die das erste Gitter und/oder das zweite Gitter bewegt, wobei die Bewegungsfrequenz Intensitätsschwankungen des resultierenden Moiree-Musters verursacht;
Mittel zum Detektieren der Intensitätsschwankungen; und
eine weitere Bewegungsvorrichtung zum Bewegen einer Linse der Beleuchtungsoptik zur Einstellung der Fokalebene, in der das Objekt detektiert wird, vorgesehen ist;
wobei die Mittel zum Detektieren der Intensitätsschwankungen mittels Bandpassfilterung die Signalstärke der Bewegungsfrequenz messen, wobei ein Objekt, welches im Fokus ist, ein Signal erzeugt.

Das Moiree-Muster ist nur erkennbar, wenn sich das Objekt im Fokus befindet. Um eine hohe Auflösung zu erreichen, wird demgemäss vorzugsweise eine Optik mit grosser numerischer Apertur, und somit mit geringer Schärfentiefe, eingesetzt.

Durch Bewegen wenigstens eines der Gitter erfolgt eine Bewegung des Moiree-Musters mit der gleichen Bewegungsfrequenz, was durch den Sensor als Helligkeits- bzw. Intensitätsschwankungen des Moiree-Musters erfasst wird. Somit wird durch den Sensor ein starkes, konstantes Signal mit einer Überlagerung eines schwachen Wechselsignals für die erfasste Intensitätsschwankung des Moiree-Musters erfasst.

Die Frequenz des zur besseren Erfassung des Objekts verursachten Wechselsignals entspricht der Bewegungsfrequenz in Bezug auf das oder die Gitter. Somit kann das Signal mittels Bandpassfilterung, vorzugsweise Schmalbandfilterung, oder Fourier-Analyse herausgefiltert werden und kann die Signalstärke nur der interessierenden Frequenz gemessen werden. Damit kann trotz ungünstiger Verhältnisse in Bezug auf die Schärfentiefe in jedem Punkt einer Fokalebene für ein Objekt analysiert werden, ob eine Reflexion.von dem Objekt erfolgt oder nicht.

Das erfindungsgemässe Messverfahren erfolgt ähnlich wie mit einem Konfokalmikroskop, wobei ein Objekt, welches im Fokus ist, ein Signal erzeugt. Das Bewegen wenigstens eines der Gitter erfolgt bei der Erfindung zum Erreichen eines besseren Signal/Rausch-Verhältnisses. Vorteilhaft können transluzente Proben gemessen werden. Erfindungsgemäss können sogar senkrechte Wände gemessen werden.

Vorzugsweise sind gemäss der Erfindung die Muster des ersten Gitters und/oder des zweiten Gitters linienartig oder schachbrettartig. Die Bewegung des ersten Gitters und/oder des zweiten Gitters erfolgt bevorzugt kontinuierlich rotierend. Es ist vorzuziehen, dass das erste Gitter und/oder das zweite Gitter aus radialen Linien oder aus mehrgängigen Spiralen besteht.

Das zweite Gitter im Strahlengang des reflektierten Lichtstrahls kann vor dem Sensor oder durch eine Pixelstruktur des Sensors ausgebildet sein.

Die gemäss der Erfindung eingesetzte Lichtquelle kann eine LED oder ein LED-Cluster mit mehreren LEDs sein.

Es kann aber auch ein Laser mit grosser Leistung eingesetzt werden. Im Fall einer Laserbeleuchtung muss die räumliche Kohärenz z.B. mittels bewegten Diffusoren/Streuscheiben zerstört werden. Ein Laser hat deshalb Vorteile, weil eine Laserlichtquelle eine aussergewöhnlich hohe Effizienz aufweisen kann (heute ca. 50%), welche von anderen Lichtquellen nicht erreicht wird.

Der von der Lichtquelle ausgesendete Lichtstrahl durchläuft eine Beleuchtungsoptik. Ein Teil der Beleuchtungsoptik ist vorzugsweise gleich einem Teil der Abbildungsoptik.

Insbesondere weist die Beleuchtungsoptik eine zwischen der Lichtquelle und dem ersten Gitter vorgesehene Sammellinse zum Parallelisieren des von der Lichtquelle ausgesendeten Lichtstrahls, Linsen zum Ausrichten des Lichtstrahls, einen Spiegel zum Umlenken des Lichtstrahls in Richtung zu dem Objekt und eine weitere Linse zum Ausrichten des Lichtstrahls auf.

Die Abbildungsoptik weist insbesondere eine Linse zum Ausrichten des vom Objekt reflektierten Lichtstrahls, einen Spiegel zum Umlenken des reflektierten Lichtstrahls in Richtung zu der Lichtquelle, Linsen zum Ausrichten des vom Spiegel reflektierten Lichtstrahls und einen weiteren Spiegel zum Umlenken des reflektieren Lichtstrahls in Richtung zu dem Sensor auf.

Im Strahlengang des Lichtstrahls vor dem Objekt bzw. im Strahlengang des vom Objekt reflektierten Lichtstrahls vor dem Sensor ist vorzugsweise weiterhin ein polarisierender Strahlteiler vorgesehen, um eine Trennung zwischen dem das Objekt bestrahlenden Lichtstrahl und dem reflektierten Lichtstrahl zu erreichen und somit Störeinflüsse unterdrücken zu können. In diesem Fall wird vorzugsweise vor dem Objekt noch eine λ/4-Verzögerungsplatte eingesetzt, um die Polarisationsrichtung des reflektierten Lichtstrahls gegenüber dem das Objekt bestrahlenden Lichtstrahl um 90° zu drehen.

Der Sensor kann ein Zeilensensor sein, mit welchem eine Erfassung des Objekts in einer Richtung erfolgt.

Mit der Vorrichtung gemäss der Erfindung erfolgt eine Abtastung des Objekts insbesondere in zwei Richtungen, wobei alle erfassbaren Reflexionen in einer Ebene gefunden werden.

Der Sensor kann ein Bildsensor sein, der viele Stellen des Objekts gleichzeitig erfassen kann. Dieser Bildsensor ist vorzugsweise ein Pixelbild-Smartsensor, der zusätzlich zum Erfassen vieler Stellen des Objekts eine Vorverarbeitung durchführen kann, um die durch das bewegte Moiree-Muster erzeugten Intensitätsschwankungen zu erkennen.

Weiterhin ist vorzugsweise eine Datenverarbeitungseinrichtung zur Berechnung der Oberfläche des Objekts auf der Basis der vom Sensor erfassten Tomografiedaten vorgesehen.

Die Vorrichtung und wenigstens ein Teil der Datenverarbeitungseinrichtung sind insbesondere in einer Scannereinheit vorgesehen, die derart ausgelegt ist, dass sie ein handliches Gerät zur Messung der Formen von Zähnen im Mund eines Patienten ist.

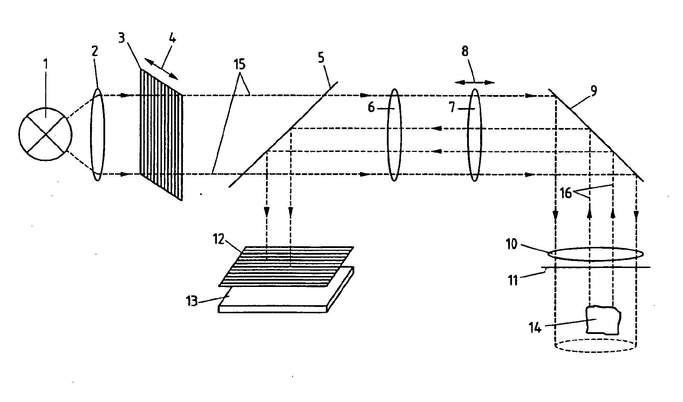

Die angegebenen und weitere Merkmale und Einzelheiten der Erfindung werden einem Fachmann auf dem Gebiet aus der folgenden detaillierten Beschreibung und der beigefügten Zeichnung klarer, die Merkmale der vorliegenden Erfindung anhand eines Beispiels darstellt und wobei die einzige
- Figur: einen prinzipiellen Aufbau einer Vorrichtung gemäss der vorliegen- den Erfindung schematisch darstellt.

Im Folgenden wird die vorliegende Erfindung anhand einer bevorzugten Ausführungsform unter Bezugnahme auf die beigefügte Zeichnung detailliert erklärt werden.

Die Figur zeigt einen prinzipiellen Aufbau einer Vorrichtung zur tomografischen Erfassung von Objekten, vorzugsweise Zähnen, gemäss der vorliegenden Erfindung.

Die in der Figur gezeigte Vorrichtung zur tomografischen Erfassung von Objekten weist Folgendes auf: eine Lichtquelle 1, die einen Lichtstrahl 15 zum Bestrahlen des Objekts 14 erzeugt; ein im Strahlengang des Lichtstrahls 15 hinter der Lichtquelle 1 angeordnetes erstes Gitter 3, durch welches der Lichtstrahl 15 vor einem Bestrahlen des Objekts 14 geführt wird, so dass ein Muster des ersten Gitters 3 auf das Objekt 14 projiziert wird; eine Abbildungsoptik 5, 6, 7, 9, 10 zur Abbildung des Objekts 14 auf einen Sensor 13; und ein im Strahlengang des reflektierten Lichtstrahls 16 vorgesehenes zweites Gitter 12 mit einem zum ersten Gitter 3 passenden Muster, durch welches zweite Gitter 12 der reflektierte Lichtstrahl 16 mit dem Muster des ersten Gitters 3 geführt wird, so dass der Sensor 13 den vom Objekt 14 reflektierten Lichtstrahl 16 mit einem aus einer Überlagerung des Musters des ersten Gitters 3 und des Musters des zweiten Gitters 12 resultierenden Moiree-Muster erfasst.

Die Lichtquelle 1 der erfindungsgemässen Vorrichtung kann eine LED oder ein LED-Cluster mit mehreren LEDs sein.

Der von der Lichtquelle 1 ausgesendete Lichtstrahl 15 durchläuft vor einem Auftreffen auf das Objekt 14 eine Beleuchtungsoptik 2, 6, 7, 9, 10. Wie es in der Figur gezeigt ist, umfasst diese Beleuchtungsoptik 2, 6, 7, 9, 10 eine zwischen der Lichtquelle 1 und dem ersten Gitter 3 vorgesehene Sammellinse 2 zum Parallelisieren des von der Lichtquelle 1 ausgesendeten Lichtstrahls 15, Linsen 6, 7 zum Ausrichten den Lichtstrahls 15, einen Spiegel 9 zum Umlenken des Lichtstrahls 15 in Richtung zu dem Objekt 14 und eine weitere Linse 10 zum Ausrichten den Lichtstrahls 15.

Die in der Figur dargestellte Abbildungsoptik 5, 6, 7, 9, 10 umfasst eine Linse 10 zum Ausrichten des vom Objekt 14 reflektierten Lichtstrahls 16, einen Spiegel 9 zum Umlenken des reflektierten Lichtstrahls 16 in Richtung zu der Lichtquelle 1, Linsen 7, 6 zum Ausrichten des vom Spiegel 9 reflektierten Lichtstrahls 16 und einen weiteren Spiegel 5 zum Umlenken des reflektieren Lichtstrahls 16 in Richtung zu dem Sensor 13. Der Spiegel 5 ist hier ein halbdurchlässiger Spiegel.

Somit ist ein Teil der Beleuchtungsoptik 2, 6, 7, 9, 10 gleich einem Teil der Abbildungsoptik 5, 6, 7, 9, 10. Dies spart Platz und Kosten und zeigt den Vorteil eines Eliminierens einer Verzerrung einer Projektion eines Musters auf dem Objekt durch Verwenden der gleichen Optik für den reflektierten Lichtstrahl. Jedoch wird eine Beleuchtung am Objekt teilweise als Glanz wieder zurückgeworfen und gelangt als Störlicht zum Sensor. Um einen Einfluss von Störlicht am Sensor zu eliminieren, ist im Strahlengang des Lichtstrahls 15 vor dem Objekt 14 und/oder im Strahlengang des vom Objekt 14 reflektierten Lichtstrahls 16 vor dem Sensor 13 weiterhin als halbdurchlässiger Spiegel 5 ein polarisierender Strahlteiler sowie ein Zirkularpolarisator 11 vorgesehen. Als dieser in der Figur gezeigte Zirkularpolarisator 11 kann beispielsweise eine λ/4-Verzögerungsplatte eingesetzt werden, mit welcher nach einem zweimaligen Durchlaufen von ihr eine um 90° gedrehte Polarisationsrichtung des reflektierten Lichtstrahls 16 zu dem das Objekt 14 beleuchtenden Lichtstrahl 15 erreicht werden kann.

Das zweite Gitter 12 im Strahlengang des reflektierten Lichtstrahls 16 ist in der Figur vor dem Sensor 13 angeordnet gezeigt. Es kann aber auch durch eine Pixelstruktur des Sensors 13 ausgebildet sein. Die Muster des ersten Gitters 3 und des zweiten Gitters 12 können beispielsweise linienartig oder schachbrettartig sein.

Erfindungsgemäss weist die Vorrichtung der Figur weiterhin eine Bewegungseinrichtung 4 auf, die das erste Gitter 3 bewegt, wobei die Bewegungsfrequenz Intensitätsschwankungen des resultierenden Moiree-Musters verursacht. Die Bewegungseinrichtung 4 kann auch derart vorgesehen sein, dass sie alternativ oder zusätzlich das zweite Gitter 12 bewegt.

Die Bewegung kann oszillierend oder kontinuierlich erfolgen.

Bei einer oszillierenden Bewegung sind vorzugsweise gemäss der Erfindung die Muster des ersten Gitters 3 und des zweiten Gitters 12 linienartig oder schachbrettartig. Denkbar ist aber auch jedes andere Muster, welches durch Verschiebung der Überlappung der Muster zu Intensitätsänderungen führt.

Bei einer kontinuierlichen Bewegung kann zum Beispiel an Stelle des in der Figur gezeigten oszillierenden Gitters 3 eine Scheibe mit radialen Linien rotiert werden. Dann wird anstelle des zweiten Gitters 12 ein Muster gewählt, welches dem entsprechenden Ausschnitt auf der Scheibe entspricht.

Bei einer rotierenden Scheibe kann die archimedische Spirale ein besonders gut geeignetes Muster darstellen. Bei einer solchen Spirale ist der Abstand zwischen den Linien konstant und unabhängig von der radialen Position auf der Scheibe, womit die Auflösung des Scanners überall im Bild gleich wird.

Eine solche Spirale kann auch mehrgängig ausgebildet sein. Durch geeignete Wahl der Anzahl Linien der Spirale kann bei einer gewissen Linienfrequenz die Drehzahl der Scheibe in einen Bereich gebracht werden, der für den Antrieb der Scheibe günstig wird.

Durch Bewegen wenigstens eines des ersten Gitters 3 und des zweiten Gitters 12 erfolgt eine Bewegung des Moiree-Musters mit der gleichen Bewegungsfrequenz, was durch den Sensor 13 als Helligkeits- bzw. Intensitätsschwankungen des Moiree-Musters erfasst wird. Somit erfasst der Sensor 13 ein starkes, konstantes Signal mit einer Überlagerung eines schwachen Wechselsignals für die erfasste Intensitätsschwankung des Moiree-Musters. Bei einer oszillierenden Bewegung ist die Bewegungsfrequenz der Linien gleich der Oszillationsfrequenz, bei einer kontinuierlichen Bewegung ist die Bewegungsfrequenz der Linien gleich der Linienfrequenz, also Liniengeschwindigkeit dividiert durch Linienabstand. Im Folgenden ist jeweils nur von Bewegungsfrequenz die Rede. Die Frequenz des zur besseren Erfassung des Objekts 14 verursachten Wechselsignals entspricht der Bewegungsfrequenz in Bezug auf das oder die Gitter 3, 12. Somit kann dieses Wechselsignal mittels Bandpassfilterung, vorzugsweise Schmalbandfilterung, oder Fourier-Analyse herausgefiltert werden und kann die Signalstärke nur der interessierenden Frequenz gemessen werden. Damit kann erfindungsgemäss trotz ungünstiger Verhältnisse in Bezug auf die Schärfentiefe in jedem Punkt in einer Fokalebene für ein Objekt analysiert werden, ob eine Reflexion vom Objekt erfolgt oder nicht.

Die in der Figur gezeigte Vorrichtung weist eine weitere Bewegungsvorrichtung 8 zum Bewegen einer Linse 7 der Beleuchtungsoptik 2, 6, 7, 9, 10 zur Einstellung der Fokalebene, in der das Objekt 14 detektiert wird, auf.

Da der ganze Scanvorgang recht schnell erfolgen soll (zum Beispiel 10 Scans pro Sekunde), muss auch die Linse 7 schnell bewegt werden. Da das Gerät ein kleines, handliches Gerät sein soll, werden die entsprechenden Beschleunigungskräfte spürbar und führen zu störenden Vibrationen. Diese Beschleunigungskräfte werden ausgeglichen mit einer Gegenmasse, welche entgegen der Linse 7 bewegt wird. Durch geeignete Wahl der Gegenmasse sowie der Bescheunigung dieser Masse werden die resultierenden Reaktionskräfte gleich null.

Der Sensor 13 kann ein Zeilensensor sein, mit welchem eine Erfassung des Objekts 14 in einer Richtung erfolgt.

Mittels der erfindungsgemässen Vorrichtung erfolgt eine Abtastung des Objekts 14 vorzugsweise in zwei Richtungen, wobei alle erfassbaren Reflexionen des Objekts in einer Fokalebene gefunden werden.

Der Sensor 13 kann ein Bildsensor sein, der viele Stellen des Objekts 14 gleichzeitig erfassen kann. Dieser Bildsensor 13 ist vorzugsweise ein Pixelbild-Smartsensor, der zusätzlich zum Erfassen vieler Stellen des Objekts 14 eine Vorverarbeitung durchführen kann, um die durch das bewegte Moiree-Muster erzeugten Intensitätsschwankungen zu erkennen.

Erfindungsgemäss weist die Vorrichtung eine Datenverarbeitungseinrichtung zur Berechnung der Oberfläche des Objekts 14 auf der Basis der vom Sensor 13 erfassten Tomografiedaten auf. Die Vorrichtung und wenigstens ein Teil der Datenverarbeitungseinrichtung sind insbesondere in eine Scannereinheit eingebaut, die derart ausgelegt ist, dass sie ein handliches Gerät zur Messung der Formen von Zähnen im Mund eines Patienten ist.

Wenn bei einer Vorrichtung zur tomografischen Erfassung aus Gründen der Effizienz eine grosse Apertur verwendet werden muss, kann keine optische Kohärenztomographie (OCT) verwendet werden, da dann ein Interferenzmuster auf dem Sensor mehrere Perioden auf einem Pixel eines Sensors hat und sich Interferenzstreifen gegenseitig auslöschen.

Beim Scannen von grossen Objekten unter Verwendung der optischen Kohärenztomographie wird die Apertur sensorseitig gross. Auch wird beim Scannen von transluzenten Körpern, wie von Zähnen, die Signalstärke relativ schwach. Somit ist man auf eine grosse Apertur angewiesen.

Bei der erfindungsgemässen Vorrichtung unter Verwendung einer parallelen optischen Brennpunkttomographie (pOFPT: parallel Optical Focal Point Tomography) gibt es das oben angegebene Problem nicht. Weiterhin ist das System aufgrund des Fehlens eines Interferometers robust. Eine Abtastgeschwindigkeit und eine Modulationsfrequenz sind voneinander unabhängig, was eine höhere Abtastgeschwindigkeit zulässt. Schliesslich ist bei der erfindungsgemässen Vorrichtung kein Referenzarm nötig.

Die Art der Signale ist jedoch sehr ähnlich wie bei einem OCT-Gerät. Ein beispielhaftes Signal an der Stelle, wo das Objekt im Fokus ist, ist ein Wechselsignal. Wegen der Ähnlichkeit der Signale kann bei pOFPT die gleiche Auswerteelektronik verwendet werden wie bei OCT, insbesondere auch der Pixelbild-Smartsensor. Bei einem Signal, wie es bei einem Laser-Konfokalmikroskop entsteht, ist infolge des fehlenden Wechselsignals die Störsignalunterdrückung ungleich schwieriger. Zudem sind Laser-Konfokalmikroskope sehr viel schwieriger zu realisieren.

Somit zeigt die vorliegende Erfindung eine Vorrichtung zur tomografischen Erfassung von Objekten, insbesondere von Zähnen, mit welcher auf einfache und schnelle Weise horizontale Schnitte eines Objekts gefunden werden, um mit diesen Schnitten dreidimensionale Oberflächen des Objekts erhalten zu können. Mit der Vorrichtung können auch Informationen aus dem Inneren eines halbdurchlässigen Körpers gefunden werden.

## Patentansprüche

1. Vorrichtung zur tomografischen Erfassung von Objekten (14), vorzugsweise Zähnen, welche Vorrichtung folgendes aufweist:
eine Lichtquelle (1), die einen Lichtstrahl (15) zum Bestrahlen des Objekts (14) erzeugt;
ein im Strahlengang des Lichtstrahls (15) hinter der Lichtquelle (1) angeordnetes erstes Gitter (3), durch welches der Lichtstrahl (15) vor einem Bestrahlen des Objekts (14) geführt wird, so dass ein Muster des ersten Gitters (3) auf das Objekt (14) projiziert wird;
eine Abbildungsoptik (5, 6, 7, 9, 10) zur Abbildung des Objekts (14) auf einen Sensor (13);
ein im Strahlengang des reflektierten Lichtstrahls (16) vorgesehenes zweites Gitter (12) mit einem zum ersten Gitter (3) passenden Muster, durch welches zweite Gitter (12) der reflektierte Lichtstrahl (16) mit dem Muster des ersten Gitters (3) geführt wird, so dass der Sensor (13) den vom Objekt (14) reflektierten Lichtstrahl (16) mit einem aus einer Überlagerung des Musters des ersten Gitters (3) und des Musters des zweiten Gitters (12) resultierenden Moiree-Muster erfasst;
eine Bewegungseinrichtung (4), die das erste Gitter (3) und/oder das zweite Gitter (12) bewegt, wobei die Bewegungsfrequenz Intensitätsschwankungen des resultierenden Moiree-Musters verursacht; und Mittel zum Detektieren der Intensitätsschwankungen;
***dadurch gekennzeichnet, dass***
eine weitere Bewegungsvorrichtung (8) zum Bewegen einer Linse (7) der Beleuchtungsoptik (2, 6, 7, 9, 10) zur Einstellung der Fokalebene, in der das Objekt detektiert wird, vorgesehen ist; und dass
die Mittel zum Detektieren der Intensitätsschwankungen mittels Bandpassfilterung die Signalstärke der Bewegungsfrequenz messen, wobei ein Objekt, welches im Fokus ist, ein Signal erzeugt.

2. Vorrichtung nach Anspruch 1, **dadurch gekennzeichnet, dass** die Mittel zum Detektieren der Intensitätsschwankungen mittels Schmalbandfilterung oder Fourier-Analyse die Signalstärke der Bewegungsfrequenz messen.

3. Vorrichtung nach einem der vorangehenden Ansprüche, **dadurch gekennzeichnet, dass** die Muster des ersten Gitters (3) und/oder des zweiten Gitters (12) linienartig oder schachbrettartig sind/ist.

4. Vorrichtung nach einem der vorangehenden Ansprüche, **dadurch gekennzeichnet, dass** die Bewegung des ersten Gitters (3) und/oder des zweiten Gitters (12) kontinuierlich rotierend erfolgt.

5. Vorrichtung nach Anspruch 4, **dadurch gekennzeichnet, dass** das erste Gitter (3) und/oder das zweite Gitter (12) aus radialen Linien oder aus mehrgängigen Spiralen bestehen/besteht.

6. Vorrichtung nach einem der vorangehenden Ansprüche, **dadurch gekennzeichnet, dass** das zweite Gitter (12) im Strahlengang des reflektierten Lichtstrahls (16) vor dem Sensor (13) oder durch eine Pixelstruktur des Sensors (13) ausgebildet ist.

7. Vorrichtung nach einem der vorangehenden Ansprüche, **dadurch gekennzeichnet, dass** die Lichtquelle (1) eine LED oder ein LED-Cluster mit mehreren LEDs ist.

8. Vorrichtung nach einem der Ansprüche 1 bis 6, **dadurch gekennzeichnet, dass** die Lichtquelle (1) ein Laser, insbesondere ein Laser hoher Leistung, ist, wobei die räumliche Kohärenz mittels mindestens einer bewegten Streuscheibe zerstört wird.

9. Vorrichtung nach einem der vorangehenden Ansprüche, **dadurch gekennzeichnet, dass** der von der Lichtquelle (1) ausgesendete Lichtstrahl (15) die Beleuchtungsoptik (2, 6, 7, 9, 10) durchläuft, von welcher ein Teil gleich einem Teil der Abbildungsoptik (5, 6, 7, 9, 10) ist.

10. Vorrichtung nach einem der vorangehenden Ansprüche, **dadurch gekennzeichnet, dass** die Beleuchtungsoptik (2, 6, 7, 9, 10) eine zwischen der Lichtquelle (1) und dem ersten Gitter (3) vorgesehene Sammellinse (2) zum Parallelisieren des von der Lichtquelle (1) ausgesendeten Lichtstrahls (15), Linsen (6, 7) zum Ausrichten des Lichtstrahls (15), einen Spiegel (9) zum Umlenken des Lichtstrahls (15) in Richtung zu dem Objekt (14) und eine weitere Linse (10) zum Ausrichten des Lichtstrahls (15) aufweist.

11. Vorrichtung nach einem der vorangehenden Ansprüche, **dadurch gekennzeichnet, dass** die Abbildungsoptik (5, 6, 7, 9, 10) eine Linse (10) zum Ausrichten des vom Objekt (14) reflektierten Lichtstrahls (16), einen Spiegel (9) zum Umlenken des reflektierten Lichtstrahls (16) in Richtung zu der Lichtquelle (1), Linsen (7, 6) zum Ausrichten des vom Spiegel (9) reflektierten Lichtstrahls (16) und einen weiteren Spiegel (5) zum Umlenken des reflektieren Lichtstrahls (16) in Richtung zu dem Sensor (13) aufweist.

12. Vorrichtung nach einem der vorangehenden Ansprüche, **dadurch gekennzeichnet, dass** im Strahlengang des Lichtstrahls (15) vor dem Objekt (14) weiterhin ein Zirkularpolarisator (11) vorgesehen ist und dass im Strahlengang des vom Objekt (14) reflektierten Lichtstrahls (16) vor dem Sensor (13) weiterhin ein polarisierender Strahlteiler vorgesehen ist.

13. Vorrichtung nach einem der vorangehenden Ansprüche, **dadurch gekennzeichnet, dass** der Sensor (13) ein Zeilensensor ist, mit welchem eine Erfassung des Objekts (14) in einer Richtung erfolgt.

14. Vorrichtung nach einem der vorangehenden Ansprüche, **dadurch gekennzeichnet, dass** eine Abtastung des Objekts (14) in zwei Richtungen erfolgt, wobei alle erfassbaren Reflexionen in einer Fokalebene für das Objekt (14) gefunden werden.

15. Vorrichtung nach einem der vorangehenden Ansprüche, **dadurch gekennzeichnet, dass** der Sensor (13) ein Bildsensor ist, der viele Stellen des Objekts (14) gleichzeitig erfassen kann, wobei der Bildsensor (13) bevorzugt ein Pixelbild-Smartsensor ist, der zusätzlich zum Erfassen vieler Stellen des Objekts (14) eine Vorverarbeitung durchführen kann, um die durch das bewegte Moiree-Muster erzeugten Intensitätsschwankungen zu erkennen.

16. Vorrichtung nach einem der vorangehenden Ansprüche, **dadurch gekennzeichnet, dass** eine Datenverarbeitungseinrichtung zur Berechnung der Oberfläche des Objekts (14) auf der Basis der vom Sensor (13) erfassten Tomografiedaten vorgesehen ist.

17. Vorrichtung nach einem der vorangehenden Ansprüche, **dadurch gekennzeichnet, dass** sie und wenigstens ein Teil der Datenverarbeitungseinrichtung in einer Scannereinheit vorgesehen sind, die derart ausgelegt ist, dass sie ein handliches Gerät zur Messung der Formen von Zähnen im Mund eines Patienten ist.

## Claims

1. A device for tomographic scanning objects (14), preferably dental teeth, said device comprising the following:
a source of light (1) generating a light beam (15) for irradiating the object (14);
a first grid (3) arranged in the optical axis of the light beam (15) downstream of the source of light (1) through which the light beam (15) is guided before irradiating the object (14) so that a pattern of the first grid (3) is projected on the object (14);
an optical imaging assembly (5, 6, 7, 9, 10) for imaging the object (14) on a sensor (13);
a second grid (12) provided in the optical axis of the reflected light beam (15) having a pattern matching the first grid (3), through said second grid (12) the reflected light beam (16) having the pattern of the first grid (3) being guided so that the sensor (13) senses the light beam (16) reflected by the object (14) with a Moiré pattern resulting from overlying the pattern of the first grid (3) and the pattern of the second grid (12),
a means (4) for moving the first grid (3) and/or the second grid (12), the motional frequency causing fluctuations in the intensity of the resulting Moiré pattern, as well as means for detecting fluctuations in intensity;
**characterized in that**
a further means (8) for moving a lens (7) of the optical illuminating assembly (2, 6, 7, 9, 10) is provided for setting the focal plane in which the object (14) is detected; and that
said means for detecting fluctuations in intensity senses the signal strength of the motional frequency by means of bandpass filtering, whereby a focussed object generates a signal.

2. The device as set forth in claim 1, **characterized in that** said means for detecting fluctuations in intensity by means of bandpass filtering or Fourier analysis senses the signal strength of the motional frequency,

3. The device as set forth in any of the preceding claims, **characterized in that** the patterns of the first grid (3) and second grid (12) are line-like or checkered.

4. The device as set forth in any of the preceding claims, **characterized in that** moving the first grid (3) and/or the second grid (12) is/are preferably done by continual rotation.

5. The device as set forth in claim 4, **characterized in that** the first grid (3) and/or the second grid (12) consist(s) of radial lines or multiple-tum spirals.

6. The device as set forth in any of the preceding claims, **characterized in that** the second grid (12) in the optical axis of the reflected light beam (16) is configured upstream of the sensor (13) or by a pixel structure of the sensor (13).

7. The device as set forth in any of the preceding claim **characterized in that** the light source (1) is a LED or LED cluster.

8. The device as set forth in any of the claims 1 to 6, **characterized in that** the light source (1) is single laser, particularly a high-power laser, the spatial coherence being destroyed by means of at least one moved diffusor.

9. The device as set forth in any of the preceding claims, **characterized in that** the light beam (15) emitted by the source of light (1) passes through an optical illuminating assembly (2, 6, 7, 9, 10) which is part of the optical imaging assembly (5, 6, 7, 9, 10).

10. The device as set forth in any of the preceding claims, **characterized in that** the optical illuminating assembly (2, 6, 7, 9, 10) comprises a collimating lens (2) disposed between the source of light (1) and the first grid (3) for parallelizing the light beam (15) emitted by the source of light (1), lenses (6, 7) for aligning the light beam (15), a mirror (9) for deflecting the light beam (15) in the direction of the object (14) and a further lens (10) for aligning the light beam (15).

11. The device as set forth in any of the preceding claims, **characterized in that** optical imaging assembly (5, 6, 7, 9, 10) comprises a lens (10) for aligning the light beam (16) reflected from the object (14), a mirror (9) for deflecting the reflected light beam (16) in the direction of the source of light (1), lenses (7, 6) for aligning the light beam (16) reflected by the mirror and a further mirror (5) for deflecting the reflected light beam (16) in the direction of the sensor (13).

12. The device as set forth in any of the preceding claims, **characterized in that** inserted in the optical axis of the light beam (15) upstream of the object (14) is a circular polarisator (11) and that inserted in the optical axis of the light beam (16) reflected by the object (14) upstream of the the sensor (13) is a polarizing beam splitter.

13. The device as set forth in any of the preceding claims, **characterized in that** the sensor (13) is a line sensor with which the object (14) is sensed in one direction.

14. The device as set forth in any of the preceding claims, **characterized in that** scanning the object (14) is done in two directions, all reflections to be sensed being found in a single focal plane.

15. The device as set forth in any of the preceding claims, **characterized in that** the sensor (13) is an image sensor capable of sensing a plurality of locations of the object (14) simultaneously, the image sensor (13) being preferably a pixel image smart sensor which in addition to sensing a plurality of locations of the object (14) is also capable of implementing preprocessing to detect fluctuations in the intensity produced by the moved Moiré pattern.

16. The device as set forth in any of the preceding claims, **characterized in that** a data processor is provided for computing the surface of the object (14) on the basis of the tomography data sensed by the sensor (13).

17. The device as set forth in any of the preceding claims, **characterized in that** the device and at least part of the data processor are provided particularly in a scanner unit designed as a handy instrument for intraoral dental scanning.

## Revendications

1. Dispositif destiné à la détection tomographique d'objets (14), de préférence des dents, qui présente ce qui suit :
une source lumineuse (1) qui génère un rayon lumineux (15) pour l'irradiation de l'objet (14) ;
une première grille (3) disposée dans la trajectoire du rayon lumineux (15) derrière la source lumineuse (1), laquelle est traversée par le rayon lumineux (15) avant une irradiation de l'objet (14) de sorte qu'un modèle de première grille (3) soit projeté sur l'objet (14) ;
une optique de reproduction (5, 6, 7, 9, 10) pour la reproduction de l'objet (14) sur un capteur (13) ;
une seconde grille (12) prévue dans la trajectoire du rayon lumineux réfléchi (16) avec un modèle adapté à la première grille (3), laquelle est traversée par le rayon lumineux réfléchi (16) avec le modèle de la première grille (3) de sorte que le capteur (13) détecte le rayon lumineux (16) réfléchi par l'objet (14) avec un modèle moiré résultant d'une superposition du modèle de la première grille (3) et du modèle de la seconde grille (12) ;
un dispositif de déplacement (4) qui déplace la première grille (3) et/ou la seconde grille (12), la fréquence de déplacement engendrant des variations d'intensité du modèle moiré résultant ; et
des moyens pour détecter les variations d'intensité ;
**caractérisé en ce que**
un autre dispositif de déplacement (8) est prévu pour le déplacement d'une lentille (7) de l'optique d'éclairage (2, 6, 7, 9, 10) pour le réglage du plan focal, dans lequel l'objet est détecté ; et **en ce que**
les moyens pour détecter les variations d'intensité à l'aide d'un filtrage passe-bande mesurent l'intensité de signal de la fréquence de déplacement, un objet qui est dans le foyer, générant un signal.

2. Dispositif selon la revendication 1, **caractérisé en ce que** les moyens pour détecter les variations d'intensité à l'aide d'un filtrage passe-bande ou analyse de Fourier mesurent l'intensité de signal de la fréquence de déplacement.

3. Dispositif selon l'une quelconque des revendications précédentes, **caractérisé en ce que** le modèle de la première grille (3) et/ou de la seconde grille (12) est/sont de type linéaire ou de type damier.

4. Dispositif selon l'une quelconque des revendications précédentes, **caractérisé en ce que** le déplacement de la première grille (3) et/ou de la seconde grille (12) est effectué de manière rotative et continue.

5. Dispositif selon la revendication 4, **caractérisé en ce que** la première grille (3) et/ou la seconde grille (12) se compose(nt) de lignes radiales ou de spirales à filets multiples.

6. Dispositif selon l'une quelconque des revendications précédentes, **caractérisé en ce que** la seconde grille (12) est réalisée dans la trajectoire du rayon lumineux réfléchi (16) avant le capteur (13) ou par une structure de pixels du capteur (13).

7. Dispositif selon l'une quelconque des revendications précédentes, **caractérisé en ce que** la source lumineuse (1) est une DEL ou un cluster de DEL avec plusieurs DEL.

8. Dispositif selon l'une quelconque des revendications 1 à 6, **caractérisé en ce que** la source lumineuse (1) est un laser, en particulier un laser à haute puissance, la cohérence spatiale étant détruite à l'aide d'au moins un diffuseur en mouvement.

9. Dispositif selon l'une quelconque des revendications précédentes, **caractérisé en ce que** le rayon lumineux (15) émis par la source lumineuse (1) traverse l'optique de reproduction (2, 6, 7, 9, 10), dont une partie est identique à une partie de l'optique de reproduction (5, 6, 7, 9, 10).

10. Dispositif selon l'une quelconque des revendications précédentes, **caractérisé en ce que** l'optique d'éclairage (2, 6, 7, 9, 10) présente une lentille convexe (2) prévue entre la source lumineuse (1) et la première grille (3) pour la parallélisation du rayon lumineux (15) émis par la source lumineuse (1), des lentilles (6, 7) pour l'orientation du rayon lumineux (15), un miroir (9) pour la déviation du rayon lumineux (15) en direction de l'objet (14) et une autre lentille (10) pour l'orientation du rayon lumineux (15).

11. Dispositif selon l'une quelconque des revendications précédentes, **caractérisé en ce que** l'optique de reproduction (5, 6, 7, 9, 10) présente une lentille (10) pour l'orientation du rayon lumineux (15) réfléchi par l'objet (14), un miroir (9) pour la déviation du rayon lumineux réfléchi (16) en direction de la source lumineuse (1), des lentilles (7, 6) pour l'orientation du rayon lumineux (16) réfléchi par le miroir (9) et un autre miroir (5) pour la déviation du rayon lumineux réfléchi (16) en direction du capteur (13).

12. Dispositif selon l'une quelconque des revendications précédentes, **caractérisé en ce que** dans la trajectoire du rayon lumineux (15) avant l'objet (14) est en outre prévu un polariseur circulaire (11) et **en ce que** dans la trajectoire du rayon lumineux (16) réfléchi par l'objet (14) avant le capteur (13) est en outre prévu un séparateur de rayon polarisant.

13. Dispositif selon l'une quelconque des revendications précédentes, **caractérisé en ce que** le capteur (13) est un capteur linéaire, avec lequel est effectuée une détection de l'objet (14) dans une direction.

14. Dispositif selon l'une quelconque des revendications précédentes, **caractérisé en ce qu'**un balayage de l'objet (14) est effectué dans deux directions, toutes les réflexions détectables étant trouvées dans un plan focal pour l'objet (14).

15. Dispositif selon l'une quelconque des revendications précédentes, **caractérisé en ce que** le capteur (13) est un capteur d'images qui peut détecter en même temps de nombreux points de l'objet (14), le capteur d'image (13) étant de préférence un capteur adroit d'image de pixels qui peut réaliser en outre pour la détection de nombreux points de l'objet (14), un prétraitement afin de détecter les variations d'intensité générées par le modèle moiré en mouvement.

16. Dispositif selon l'une quelconque des revendications précédentes, **caractérisé en ce qu'**un dispositif de traitement des données pour le calcul de la surface de l'objet (14) sur la base des données tomographiques détectées par le capteur (13) est prévu.

17. Dispositif selon l'une quelconque des revendications précédentes, **caractérisé en ce qu'**il et au moins une partie du dispositif de traitement de données sont prévus dans une unité de balayage qui est configurée de telle sorte qu'elle soit un appareil manuel servant à mesurer les formes des dents dans la bouche d'un patient.
